# EUROPÄISCHE PATENTSCHRIFT

(11) **EP 2 115 262 B1**
(45) Veröffentlichungstag und Bekanntmachung des Hinweises auf die Patenterteilung: **24.06.2015**
(21) Anmeldenummer: 08707722.8
(22) Anmeldetag: 14.02.2008
(51) Int. Cl.: G04F 10/06, E06B 9/68, G04G 15/00

(54) **VERFAHREN ZUR TAGESZEITABHÄNGIGEN STEUERUNG EINER ABBLENDVORRICHTUNG SOWIE ENTSPRECHENDES STEUERSYSTEM**
METHOD FOR CONTROLLING A SHADING DEVICE ACCORDING TO THE TIME OF THE DAY, AND CORRESPONDING CONTROL SYSTEM
PROCÉDÉ DE COMMANDE D'UN DISPOSITIF OCCULTANT EN FONCTION DU MOMENT DE LA JOURNÉE ET SYSTÈME DE COMMANDE CORRESPONDANT

(30) Priorität: 15.02.2007 DE 102007007556
(43) Veröffentlichungstag der Anmeldung: 11.11.2009
(73) Patentinhaber: Zumtobel Lighting GmbH, 6850 Dornbirn (AT)
(72) Erfinder: BLUM, Jürgen, A-6973 Höchst (AT); BRÄNDLE, Christian, A-6800 Feldkirchen (AT); MAI, Christoph, 6850 Dornbirn (AT); SCHNEIDER, Jakob, A-6713 Ludesch (AT)
(74) Vertreter: Thun, Clemens
(86) Internationale Anmeldenummer: PCT/EP2008/001137
(87) Internationale Veröffentlichungsnummer: WO 2008/098767

(56) Entgegenhaltungen:
- EP-A- 0 447 849

## Beschreibung

Die Erfindung betrifft ein Steuersystem für eine tageszeitabhängige Steuerung wenigstens einer Abblendvorrichtung für wenigstens einen Raum mit wenigstens einem Fenster gemäß dem Oberbegriff des Anspruchs 1. Außerdem betrifft die Erfindung ein entsprechendes Verfahren.

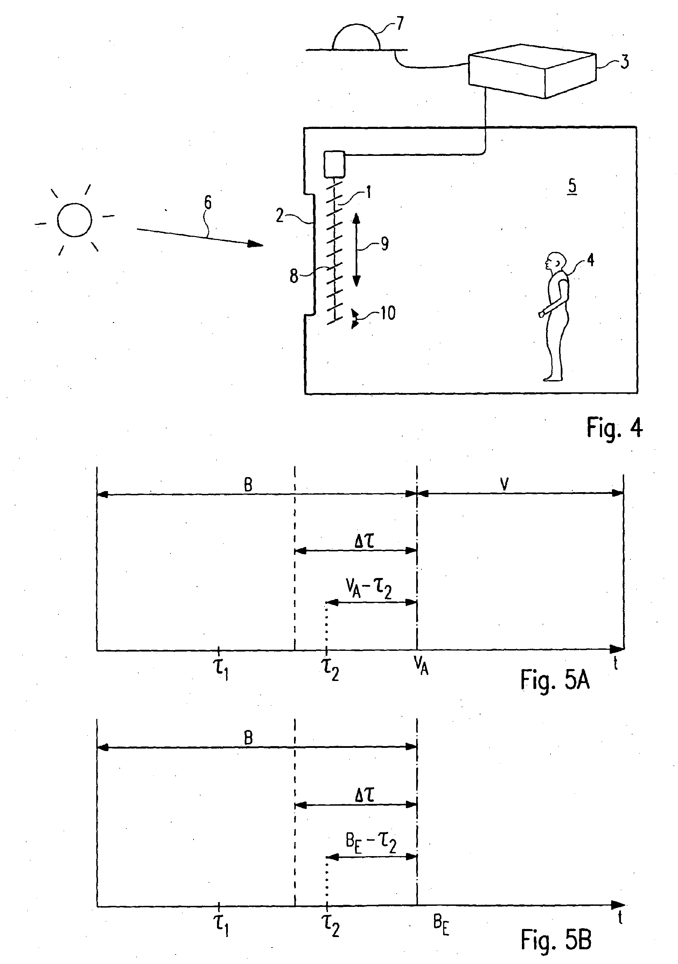

Wie in Fig. 4 sehr schematisch skizziert, kann es sich bei der Abblendvorrichtung beispielsweise um eine Jalousie 1, einen Store oder einen ähnlichen "Behang" handeln, mit der bzw. mit dem sich das betreffende Fenster 2 abblenden lässt. Zur Steuerung ist bekannterweise eine Steuervorrichtung 3 vorgesehen. In der Regel wird mit einer automatischen Steuerung einer solchen Abblendvorrichtung 1 angestrebt, eine Person 4, die sich in dem betreffenden Raum 5 befindet, vor blendendem Tageslicht 6 zu schützen, aber dennoch möglichst viel natürliches Licht in den Raum 5 einstrahlen zu lassen. In erster Linie dient eine derartige Steuerung dazu, den direkten Einfall von Sonnenlicht, das zu Blendungen führen könnte, zu verhindern.

Aus dem Stand der Technik ist dabei bekannt, vorab "potenzielle Besonnungszeiträume" festzulegen und anschließend bei der Steuerung zu berücksichtigen. Dabei soll unter "potenzieller Besonnungszeitraum" ein Zeitintervall verstanden sein, in dem die Sonne bezüglich des betreffenden Fensters so steht, dass auf Grund dieser Konstellation an sich eine Besonnung des Fensters möglich ist. Dabei ist bekannt, diese potenziellen Besonnungszeiträume dadurch zu berücksichtigen, dass während dieser Zeiträume unter der Voraussetzung, dass ein gewisses Mindestmaß an Licht in dem Raum vorhanden ist, eine Abblendung erfolgt, und außerhalb der potenziellen Besonnungszeiträume keine Abblendung vorgesehen ist.

Die Bestimmung der potenziellen Besonnungszeiträume kann dementsprechend insbesondere auf Grund der geografischen Position und der Ausrichtung des Fensters erfolgen.

Weiterhin ist bekannt, in dem betreffenden Raum die Beleuchtungsbedingungen zu erfassen, beispielsweise mit einem in Fig. 4 ebenfalls skizzierten Messkopf 7 und die Abblendvornchtung 1 auch in Abhängigkeit von diesem Wert zu steuern. Es kann demnach vorgesehen sein, dass eine Abblendung erfolgt, falls die Beleuchtung in dem Raum einen bestimmten Schwellenwert ("Blendungsschwellwert") übersteigt.

Um bei wechselnder Bewölkung besonders häufige Bewegungen der Abblendvorrichtung, die als störend empfunden werden könnten, zu vermeiden, ist weiterhin bekannt, die Abblendvornchtung nicht unmittelbar bei Eintritt der entsprechenden Bedingungen zu aktivieren bzw. bewegen, sondern erst nach einem gewissen Verzögerungszeitraum ("Hysterese"). Auf diese Weise lassen sich Fahrbewegungen der Abblendvorrichtung auf ein "sinnvolles Maß" begrenzen.

Bei den bekannten Steuersystemen kann es jedoch dazu kommen, dass in einem Zeitabschnitt eine Abblendung eingestellt wird, obwohl die tatsächlichen Beleuchtungsverhältnisse während dieser Zeit keine Abblendung erforderlich machen würden. Ein Grund hierfür kann beispielsweise darin liegen, dass sich zu dieser Zeit zwischen der Sonne und dem Fenster ein Objekt, beispielsweise ein Nachbargebäude, ein Baum oder dergleichen befindet.

Aus der Schrift EP 0 447 849 A1 ist eine elektronische Rollladensteuerung bekannt, bei der der Rollladen zu festgelegten Zeiten, die sich an den Sonnaufgangs- und Sonnenuntergangszeiten orientieren, automatisch herauf- und heruntergefahren wird. In der Jahresmitte wird der Rollladen allerdings aus Rücksicht auf die Schlafenszeit erst zu einer bestimmten Zeit nach Sonnenaufgang hochgefahren.

Der vorliegenden Erfindung liegt die Aufgabe zu Grunde, ein entsprechendes Steuersystem bzw. Verfahren weiter zu verbessern. Insbesondere soll es noch präziser gemacht werden und dabei möglichst wenig störend wirken.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein Steuersystem für eine tageszeitabhängige Steuerung einer Abblendvornchtung für einen Raum mit wenigstens einem Fenster vorgesehen, wobei durch die Steuerung die Abblendvorrichtung von einer ersten Position, in der die Abblendvorrichtung in einem Zustand ist, in dem sie das Fenster zumindest im Wesentlichen nicht abblendet, in eine zweite Position, in der die Abblendvorrichtung das Fenster zumindest teilweise abblendet, verbracht werden kann. Dabei sind potenzielle Besonnungszeiträume festgelegt, in denen die Sonne bezüglich des Fensters so steht, dass auf Grund dieser Konstellation an sich eine Besonnung des Fensters möglich ist. Diese potenziellen Besonnungszeiträume werden bei der Steuerung berücksichtigt. Außerdem ist vorab wenigstens ein Verschattungszeitraum festgelegt, in dem sich ein Objekt zwischen der Sonne und dem Fenster befindet, so dass das Fenster nicht direkt von der Sonne beschienen werden kann, wobei in dem Verschattungszeitraum keine Abblendung gewünscht und/oder erforderlich ist, wobei der wenigstens eine Verschattungszeitraum zumindest teilweise mit den potenziellen Besonnungszeiträumen überlappt, und wobei bei der Steuerung der Verschattungszeitraum ebenfalls berücksichtigt wird.

Bei der Abblendvorrichtung kann es sich beispielsweise um eine Jalousie oder einen Store oder dergleichen handeln. Eine Abblendwirkung in der zweiten Position ("Abblendposition") kann im Fall einer Jalousie beispielsweise dadurch vorgesehen sein, dass die Jalousie ein gewisses Stück weit oder ganz über das Fenster heruntergelassen ist und/oder dass der Neigungswinkel der Lamellen der Jalousie derart eingestellt ist, dass dadurch die gewünschte Abblendung erfolgt.

Durch die Festlegung eines Verschattungszeitraums lässt sich ein Zeitraum definieren, in dem die Sonne zwar so steht, dass sie auf Grund ihres Sonnenstandes auf das Fenster treffen könnte, aber ein direkter Sonneneinfall tatsächlich nicht möglich ist, weil sich in diesem Zeitraum ein Objekt zwischen der Sonne und dem Fenster befindet. Bei dem Objekt kann es sich beispielsweise um ein Nachbargebäude, um einen Baum oder dergleichen handeln. Insbesondere kann es sich also um ein quasi unbewegliches Objekt handeln.

Vorteilhaft kann dabei vorgesehen sein, dass von dem Steuersystem automatisch ein weiterer Verschattungszeitraum in Abhängigkeit von dem wenigstens einen Verschattungszeitraum festgelegt wird. Insbesondere kann dabei vorgesehen sein, dass der Anfangszeitpunkt und/oder der Endzeitpunkt des weiteren Verschattungszeitraums tagesweise übertragen wird, also beispielsweise an Folgetagen übernommen wird. Dadurch muss der weitere Verschattungszeitraum nicht gesondert eingegeben werden. Es kann dabei weiterhin vorteilhaft vorgesehen sein, dass bei der Übernahme bzw. der Übertragung des Anfangs- bzw. Endzeitpunkts jahreszeitlich bedingte Änderungen des Sonnenstandes berücksichtigt werden.

Weiterhin kann vorteilhaft vorgesehen sein, dass bei der Steuerung der Verschattungszeitraum mit höherer Priorität berücksichtigt ist, als die potenziellen Besonnungszeiträume. Auf diese Weise lässt sich sicherstellen, dass die Berücksichtigung der potenziellen Besonnungszeiten generell unter den auf Grund des Verschattungszeitraums modifizierten Bedingungen erfolgt.

Bei der Steuerung kann der festgelegte Verschattungszeitraum beispielsweise dadurch berücksichtigt werden, dass für den Fall, in dem sich die Abblendvorrichtung zu Beginn des Verschattungszeitraums nicht in der zweiten Position (Abblendposition) befindet, ein Verbringen der Abblendvorrichtung in die zweite Position nicht erfolgt.

Falls sich die Abblendvorrichtung zu Beginn des Verschattungszeitraums in der Abblendposition befindet, kann vorgesehen sein, dass die Abblendvorrichtung innerhalb des Verschattungszeitraums, beispielsweise unmittelbar nach Beginn des Verschattungszeitraums oder zeitverzögert, von der Abblendposition in die erste Position verbracht wird. Ein entsprechendes Verbringen der Abblendvorrichtung kann auch für den Fall vorgesehen sein, dass sich zu Beginn des Verschattungszeitraums die Abblendposition in einer Zwischenposition zwischen der ersten und der zweiten Position, befindet.

Auf diese Weise kann also vermieden werden, dass durch die Steuerung eine Abblendung eingestellt wird oder gegebenenfalls erhalten bleibt, die angesichts der tatsächlichen Abschattung des Fensters nicht erforderlich wäre.

Für den Fall, dass unmittelbar nach Ende des Verschattungszeitraums ein potenzieller Besonnungszeitraum folgt, kann vorgesehen sein, dass die Abblendvorrichtung bereits vor Ende des Verschattungszeitraums in die erste Position verbracht wird. Hierfür kann eine Vorlaufzeit vorgesehen sein, die beispielsweise einige Sekunden oder einige Minuten Dauer betragen kann. Dadurch kann sichergestellt werden, dass bereits im Endzeitpunkt des Verschattungszeitraums die gewünschte Abblendwirkung vollständig gegeben ist. Eine entsprechende Vorlaufzeit ist auch in dem Fall vorteilhaft, dass der Endzeitpunkt des Verschattungszeitraums systembedingt nur mit begrenzter Genauigkeit, zum Beispiel nur auf 5 oder 10 Minuten genau, angegeben werden kann. Die Vorlaufzeit kann in diesem Fall dementsprechend mindestens so lange gewählt werden, wie die Dauer dieser Eingabegenauigkeit, beispielsweise zuzüglich derjenigen Zeit, die für ein Verbringen der Abblendvorrichtung von der ersten Position in die Abblendposition nötig ist.

Vorteilhaft kann vorgesehen sein, dass bei der Steuerung zu einem Zeitpunkt vor Beginn des Verschattungszeitraums die Zeitspanne bis zum Beginn des Verschattungszeitraums erfasst und berücksichtigt wird. Beispielsweise kann dies dadurch berücksichtigt werden, dass die Abblendvorrichtung von der ersten Position oder gegebenenfalls von einer Zwischenposition nicht in die Abblendposition verbracht wird, falls die erfasste Zeitspanne bis zum Beginn des Verschattungszeitraums kleiner ist als eine vorab festgelegte Referenzzeitspanne, und zwar insbesondere auch in dem Fall, dass auf Grund der Beleuchtungsverhältnisse an sich eine Abblendung erfolgen würde. Auf diese Weise kann eine möglicherweise störende Bewegung der Abblendvorrichtung vermieden werden. Eine derartige Referenzzeitspanne kann beispielsweise zwischen 1 Minute und 15 Minuten betragen.

Es kann vorgesehen sein, dass der wenigstens eine Verschattungszeitraum vorab durch manuelle Eingabe festgelegt ist.

Gemäß einem weiteren Aspekt der Erfindung ist Steuersystem für eine tageszeitabhängige Steuerung wenigstens einer Abblendvorrichtung für wenigstens einen Raum mit wenigstens einem Fenster vorgesehen, wobei durch die Steuerung die Abblendvorrichtung von einer ersten Position, in der die Abblendvorrichtung in einem Zustand ist, in dem sie das Fenster zumindest im Wesentlichen nicht abblendet, in eine zweite Position, in der die Abblendvorrichtung das Fenster zumindest teilweise abblendet, verbracht werden kann. Dabei sind "potenzielle Besonnungszeiträume" festgelegt, in denen die Sonne bezüglich des Fensters so steht, dass auf Grund dieser Konstellation an sich eine Besonnung des Fensters möglich ist. Diese potenziellen Besonnungszeiträume werden bei der Steuerung berücksichtigt. Dabei wird bei der Steuerung zu einem Zeitpunkt innerhalb eines potenziellen Besonnungszeitraums die Zeitspanne von dem Zeitpunkt bis zum Ende des potenziellen Besonnungszeitraums berücksichtigt, und zwar indem die Abblendvorrichtung zwischen dem Zeitpunkt und dem Ende des potenziellen Besonnungszeitraums nicht in die zweite Position verbracht wird, falls die Zeitspanne kleiner ist als eine vorab festgelegte Referenzzeitspanne.

Insbesondere wird also die Abblendvorrichtung in diesem Fall nicht von der ersten Position in die Abblendposition verbracht, auch wenn dies auf Grund der Beleuchtungsbedingungen an sich vorgesehen wäre. Dadurch lässt sich eine störende Bewegung der Abblendvorrichtung vermeiden. Die Referenzzeitspanne kann dabei beispielsweise etwa einige Minuten betragen.

Gemäß einem weiteren Aspekt der Erfindung ist ein Verfahren zur tageszeitabhängigen Steuerung wenigstens einer Abblendvorrichtung für wenigstens einen Raum mit wenigstens einem Fenster vorgesehen. Dabei kann durch die Steuerung die Abblendvorrichtung von einer ersten Position, in der die Abblendvorrichtung in einem Zustand ist, in dem sie das Fenster zumindest im Wesentlichen nicht abblendet, in eine zweite Position, in der die Abblendvorrichtung das Fenster zumindest teilweise abblendet, verbracht werden. Es werden "potenzielle Besonnungszeiträume" festgelegt, in denen die Sonne bezüglich des Fensters so steht, dass auf Grund dieser Konstellation an sich eine Besonnung des Fensters möglich ist. Diese potenziellen Besonnungszeiträume werden bei der Steuerung berücksichtigt. Außerdem wird vorab wenigstens ein "Verschattungszeitraum" festgelegt, in dem keine Abblendung gewünscht und/oder erforderlich ist, wobei der wenigstens eine Verschattungszeitraum zumindest teilweise mit den potenziellen Besonnungszeiträumen überlappt, und wobei bei der Steuerung der Verschattungszeitraum ebenfalls berücksichtigt wird.

Die Erfindung wird im Folgenden an Hand eines Ausführungsbeispiels und mit Bezug auf die Zeichnungen näher erläutert. Es zeigen:
- Fig. 1: ein erstes Beispiel für ein Eingabefenster eines "Verschattungseditors",
- Fig. 2: ein weiteres Beispiel für ein Eingabefenster eines Verschattungseditors,
- Fig. 3: ein Diagramm zur zeitverzögerten Bewegung und Bewegung mit Vorlaufzeit der Abblendvorrichtung innerhalb eines Verschattungszeitraums,
- Fig. 4: eine Skizze zur Veranschaulichung von Komponenten, die bei einem erfindungsgemäßen Verfahren eine Rolle spielen können, und
- Figuren 5A und 5B: zwei Skizzen zur Berücksichtigung eines Referenzzeitraums vor Beginn eines Verschattungszeitraums oder vor Ende eines potenziellen Besonnungszeitraums.

Beim hier dargestellten Ausführungsbeispiel ist zur Umsetzung eines erfindungsgemäßen Verfahrens ein Computerprogramm bzw. eine Software vorgesehen, die direkt in den Speicher eines Computers geladen werden kann, zum Steuern der erfindungsgemäßen Verfahrensschritte, wenn das Programm auf einem Computer läuft. Die Software dient also zur tageszeitabhängigen Steuerung einer Abblendvorrichtung, beispielsweise in Form einer in Fig. 4 skizzierten Jalousie 1 mit Lamellen 8, für einen Raum 5 mit wenigstens einem Fenster 2.

Mit Hilfe der Software kann über eine Steuervorrichtung 3 die Abblendvorrichtung 1 von einer ersten Position, in der die Abblendvorrichtung 1 in einem Zustand ist, in dem sie das Fenster 2 zumindest im Wesentlichen nicht abblendet, in eine zweite Position ("Abblendposition") verbracht bzw. bewegt werden, in der die Abblendvorrichtung 1 das Fenster 2 zumindest teilweise abblendet, so dass also eine im Raum 5 befindliche Person 4 vor einer unerwünschten Blendung geschützt werden kann. Im Fall einer Jalousie 1 kann die erste Position also diejenige Position sein, in der die Jalousie bis zur oder über die Fensteroberkante hochgezogen ist. Die zweite Position kann eine Position sein, wie sie in Fig. 4 skizziert ist, in der die Jalousie 1 soweit heruntergelassen ist, dass die gewünschte Abblendwirkung erzielt ist. Dies ist in Fig. 4 durch den großen Doppelpfeil 9 symbolisch dargestellt. Dabei kann in einer herunter gelassenen Position der Jalousie 1 weiterhin die Neigung der Lamellen 8 der Jalousie 1 mit Bezug auf die Horizontale berücksichtigt werden, wie dies durch den kleinen Doppelpfeil 10 symbolisiert ist.

Auch kann im Fall einer Jalousie 1 mit Lamellen 8 vorgesehen sein, dass in der ersten Position die Lamellen 8 so geneigt sind, dass das natürliche Licht von Außen im Wesentlichen durchgelassen wird und die Abblendposition durch eine entsprechende Verstellung des Neigungswinkels der Lamellen 8 erzielt wird.

Zur Durchführung des erfindungsgemäßen Verfahrens bzw. zur Bedienung eines erfindungsgemäßen Steuersystems werden zunächst die sogenannten potenziellen Besonnungszeiten festgelegt. Das sind diejenigen Zeiten, in denen die Sonne relativ zu dem Fenster so steht, dass auf Grund dieser Konstellation an sich eine Besonnung möglich ist. Die potenziellen Besonnungszeiten hängen somit im Allgemeinen von mehreren Faktoren ab. Hierzu gehören insbesondere
- Tageszeit und Datum,
- Geografische Position (Länge, Breite, Höhe) des Fensters,
- Ausrichtung des Fensters (Himmelsrichtung; und - falls die Fensteroberfläche nicht in der Senkrechten verläuft - Neigung des Fensters).

Bei der Ansteuerung der Abblendvorrichtung werden die potenziellen Besonnungszeiten berücksichtigt. Beispielsweise kann vorgesehen sein, dass außerhalb der potenziellen Besonnungszeiten die Abblendvorrichtung nicht von der ersten Position in die Abblendposition verbracht wird.

Bei dem hier dargestellten Ausführungsbeispiel ist weiterhin vorgesehen, dass in dem Raum dauerhaft oder in zeitlichen Abständen die Beleuchtungssituation messtechnisch erfasst wird, wie das an sich aus dem Stand der Technik bekannt ist. Dies ist in Fig. 4 durch einen entsprechenden Messkopf 7 symbolisiert. Bei dem Messwert kann es sich im Allgemeinen um unterschiedliche Beleuchtungsgrößen handeln, beispielsweise um die Beleuchtungsstärke.

Weiterhin ist dabei ein Schwellwert für den Messwert, also beispielsweise für die Beleuchtungsstärke festgelegt, im Folgenden mit "Blendungsschwellwert" bezeichnet, der angibt, ab welcher Beleuchtungsstärke mit einer möglichen Blendung gerechnet werden muss. Bei der Durchführung des Verfahrens wird dann die Abblendvorrichtung so angesteuert, dass die Abblendvorrichtung im Allgemeinen während der potenziellen Besonnungszeiten in die Abblendposition bewegt wird, falls eine Beleuchtung gemessen wird, deren Stärke über dem Blendungsschwellwert liegt.

Es hat sich als vorteilhaft erwiesen, für die Ansteuerung der Abblendvorrichtung eine Zeitverzögerung, sozusagen eine "Hysterese" vorzusehen. Beispielsweise kann auf diese Weise bei wechselhafter Bewölkung vermieden werden, dass die Abblendvorrichtung in kurzen Abständen immer wieder in unterschiedliche Positionen bewegt wird. Ein derartiges ständiges Hin- und Herbewegen wird im Allgemeinen als störend empfunden. Durch die Zeitverzögerung können die Bewegungen der Abblendvorrichtung auf ein sinnvolles Maß beschränkt werden.

Zur Steuerung ist also zunächst vorgesehen, dass die Abblendvorrichtung während eines potenziellen Besonnungszeitraums in die Abblendposition verbracht wird, sofern im Raum eine Beleuchtungsstärke gemessen wird, die über dem Blendungsschwellwert liegt.

Dabei erfolgt die Ansteuerung nicht unmittelbar bei Einsetzen dieser Bedingung, sondern mit einer gewissen Zeitverzögerung.

Es wird jedoch ausdrücklich daraufhingewiesen, dass eine derartige Zeitverzögerung für die Durchführung eines erfindungsgemäßen Verfahrens nicht notwendig ist. Das Verfahren lässt sich auch ohne diese zeitverzögerte Ansteuerung durchführen. Die zeitverzögerte Ansteuerung wird als vorteilhafte Variante angesehen.

Die soweit beschriebene Art der Ansteuerung wird gemäß diesem Ausführungsbeispiel einer Modifikation unterworfen, wie im Folgenden erläutert wird.

Weiterhin wird vorab ein Verschattungszeitraum festgelegt. Dabei gibt der Verschattungszeitraum einen Zeitabschnitt an, in dem keine Abblendung erwünscht und/oder erforderlich ist. Beispielsweise kann dies ein Zeitraum sein, in dem sich ein Objekt - beispielsweise ein Nachbargebäude, ein Baum oder dergleichen - zwischen der Sonne und dem Fenster befindet, so dass das Fenster nicht direkt von der Sonne beschienen werden kann. Diese Information kann dann bei der Steuerung der Abblendvorrichtung berücksichtigt werden. Beispielsweise kann vorgesehen sein, dass während des Verschattungszeitraums die Abblendvorrichtung nicht in Abblendposition verbracht wird. Dabei kann dies insbesondere auch für den Fall vorgesehen sein, dass der Verschattungszeitraum innerhalb eines potenziellen Besonnungszeitraums liegt. In diesem Fall wird also die Information "Verschattung" höher bewertet, als die Information "potenzielle Besonnung". Es kann also eine Hierarchie vorgesehen sein, wonach die Information des Verschattungszeitraums höher eingestuft wird, als die Information des potenziellen Besonnungszeitraums.

Weiterhin kann für den Fall, dass sich die Abblendvorrichtung zu Beginn des Verschattungszeitraums in der Abblendposition befindet, vorgesehen sein, dass die Abblendvorrichtung nach Durchlaufen des Anfangszeitpunktes des Verschattungszeitraums in die erste Position verbracht wird, wobei auch hier wiederum die entsprechende Hierarchie zwischen "Verschattung" und "potenzieller Besonnung" berücksichtigt wird. Die genannte Bewegung in die erste Position ist also insbesondere auch für den Fall vorgesehen, dass der Beginn des Verschattungszeitraums innerhalb eines potenziellen Besonnungszeitraumes liegt.

Eine analoge Bewegung in die erste Position kann auch vorgesehen sein, falls sich die Abblendvorrichtung zu Beginn des Verschattungszeitraums in einer Position zwischen der ersten und der zweiten Position befindet, also in einer entsprechenden dritten Position.

Auf diese Weise lässt sich vermeiden, dass während des Verschattungszeitraums die Abblendvorrichtung unnötigerweise oder zumindest unnötig lange in der Abblendposition verbleibt.

Weiterhin ist bei dem Ausführungsbeispiel vorgesehen, dass bei der Steuerung - wie in Fig. 5A symbolisch illustriert - zu einem Zeitpunkt τ*₂* vor Beginn des Verschattungszeitraums *V_{A}* die Zeitspanne V_{A} *- τ₂* von dem Zeitpunkt τ*₂* bis zum Beginn des Verschattungszeitraums *V_{A}* berücksichtigt wird, und zwar wie folgt:
- Falls die Zeitspanne V_{A} *- τ₂* kleiner ist als eine vorab festgelegte Referenzzeitspanne Δτ und sich zum betrachteten Zeitpunkt τ*₂* vor Beginn des Verschattungszeitraums *V_{A}* die Abblendvorrichtung in der ersten Position befindet, wird die Abblendvorrichtung zwischen dem Zeitpunkt τ*₂* und dem Beginn des Verschattungszeitraums *V_{A}* nicht in die Abblendposition verbracht. Insbesondere gilt dies auch für den Fall, dass zum betrachteten Zeitpunkt die Beleuchtungsstärke in dem Raum größer ist als der Blendungsschwellwert.
- Falls die Zeitspanne *V_{A} -* τ*₂* kleiner ist als die vorab festgelegte Referenzzeitspanne Δτ und sich zum Zeitpunkt τ*₂* vor Beginn des Verschattungszeitraums *V_{A}* die Abblendvorrichtung in der Abblendposition befindet, bleibt der Verschattungszeitraum *V* für die Steuerung zwischen dem Zeitpunkt τ*₂* und dem Beginn des Verschattungszeitraums *V_{A}* ohne Einfluss.
- Falls die Zeitspanne *V_{A} -* τ*₁* größer ist als die vorab festgelegte Referenzzeitspanne Δτ bleibt der Verschattungszeitraum *V* für die Steuerung zwischen dem Zeitpunkt τ*₁* und dem Beginn des Verschattungszeitraums *V_{A}* ohne Einfluss.

Die Referenzzeitspanne Δτ kann dabei beispielsweise einige Minuten betragen.

Auf diese Weise lässt sich beispielsweise vermeiden, dass im Fall eines Durchzugs einer kleinen Wolke vor der Sonne, kurz vor Beginn des Verschattungszeitraums, die Jalousie herunter und dann, zu Beginn des Verschattungszeitraums, gleich wieder herauf gefahren wird.

Eine analoge Steuerung kann auch vor dem Ende eines potenziellen Besonnungszeitraums *B_{E}* vorgesehen sein, wie in Fig. 5B symbolisiert.

Beim Ausführungsbeispiel ist zur Eingabe des Verschattungszeitraums ein Editor vorgesehen, der im Folgenden als "Verschattungseditor" bezeichnet wird. Mithilfe dieses Editors kann ein Verschattungszeitraum manuell festgelegt werden.

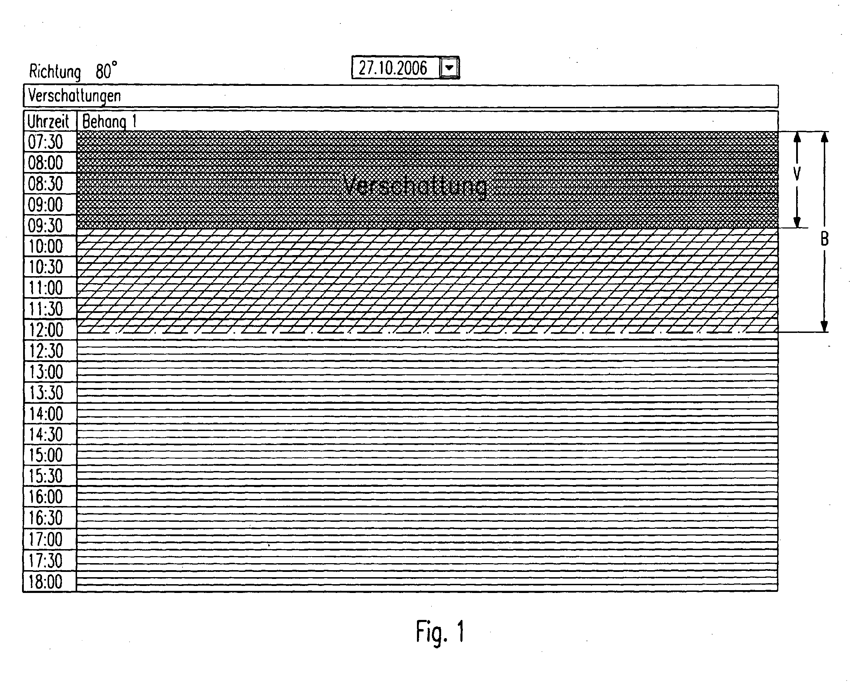

In Fig. 1 ist beispielhaft ein Eingabefeld eines derartigen Verschattungseditors gezeigt. Im gezeigten Beispiel bezieht sich der Editor auf einen Raum mit einem Fenster, das etwa nach Osten ausgerichtet ist. Dies erkennt man links oben in der Fig. 1 an der Angabe "Richtung 80°", die die Himmelsrichtung angibt, in der das Fenster orientiert ist. Oben in der Mitte kann das gewünschte Datum eingestellt werden, im gezeigten Beispiel ist der "27.10.2006" eingestellt.

Weiterhin ist im gezeigten Beispiel nur eine Abblendvorrichtung für das Fenster vorgesehen. Diese wird in der grafischen Darstellung im Editor als "Behang 1" bezeichnet.

Für den in Fig. 1 gezeigten Fall ist ein Verschattungszeitraum *V* von 7:30 Uhr bis 9:50 Uhr eingegeben.

Zur besseren Orientierung bei der Festlegung des Verschattungszeitraums *V* kann dabei eine Angabe über die potenziellen Besonnungszeiträume *B* zur Verfügung gestellt sein. Beispielsweise können diese Zeiten in dem Verschattungseditor angegeben sein. In dem in Fig. 1 gezeigten Beispiel dauert die potenzielle Besonnungszeit *B* bis 12:20 Uhr.

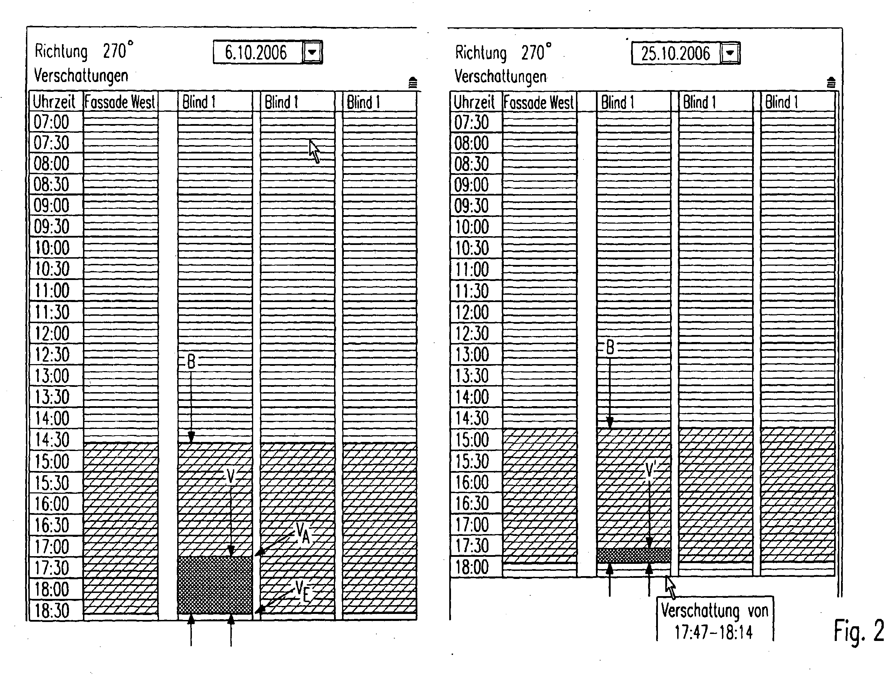

Weiterhin kann vorgesehen sein, dass nach der Eingabe eines Verschattungszeitraums *V* - wie in Fig. 2 symbolisiert - automatisch ein weiterer Verschattungszeitraum *V*' in Abhängigkeit von dem wenigstens einen Verschattungszeitraum *V* festgelegt wird. Dies kann dadurch erfolgen, dass der Anfangszeitpunkt *V_{A}* und/oder der Endzeitpunkt *V_{E}* des wenigstens einen Verschattungszeitraums *V* auf wenigstens einen Tag übertragen wird, der auf den Tag des Anfangszeitpunktes *V_{A}* bzw. des Endzeitpunktes *V_{E}* des wenigstens einen Verschattungszeitraums *V* folgt. Dabei kann der Zeitpunkt bzw. die beiden Zeitpunkte einfach übernommen werden. Vorzugsweise ist möglich, dass dabei eine entsprechende Sonnenstandsänderung gegebenenfalls berücksichtigt wird.

Bei dem in Fig. 2 gezeigten Beispiel ist im linken Teil der Verschattungseditor nach manueller Eingabe eines Verschattungszeitraums *V* mit einem Anfangszeitpunkt *V_{A}* um 17:30 Uhr und einem Endzeitpunkt *V_{E}* um 18:50 Uhr für den 06.10.2006 dargestellt ist, und zwar für ein Fenster, das nach Westen orientiert ist ("Richtung 270°") und für eine bestimmte Abblendvorrichtung oder Jalousie ("Blind 1"). Der potenzielle Besonnungszeitraum *B* dauert dabei an diesem Tag von 14:50 Uhr bis 18:50 Uhr.

Gemäß der hier dargestellten Variante ist vorgesehen, dass dieser Verschattungszeitraum *V* automatisch für die Folgetage übernommen wird, und zwar unter Berücksichtigung der entsprechenden Veränderungen der Sonnenbahn. Die Dauer des gesamten Berechnungszeitraums kann dabei festgelegt werden oder es ist vorgesehen, dass bis zu dem letzten Tag des gesamten Programmierzeitraums berechnet wird.

In der rechten Hälfte der Fig. 2 ist als Datum der 25.10.2006 eingestellt. Für diesen Tag ist für den Verschattungszeitraum *V'* automatisch 17:47 Uhr bis 18:14 Uhr ermittelt worden. Im Rahmen der Eingabegenauigkeit, die im gezeigten Beispiel 10 Minuten beträgt, erkennt man den Zeitraum (17:50 Uhr bis 18:10 Uhr) im Editor eingetragen. Der potenzielle Besonnungszeitraum *B* dauert an diesem Tag von 15:00 Uhr bis 18:10 Uhr.

Selbstverständlich sind manuelle Änderungen der automatisch berechneten Zeiten möglich.

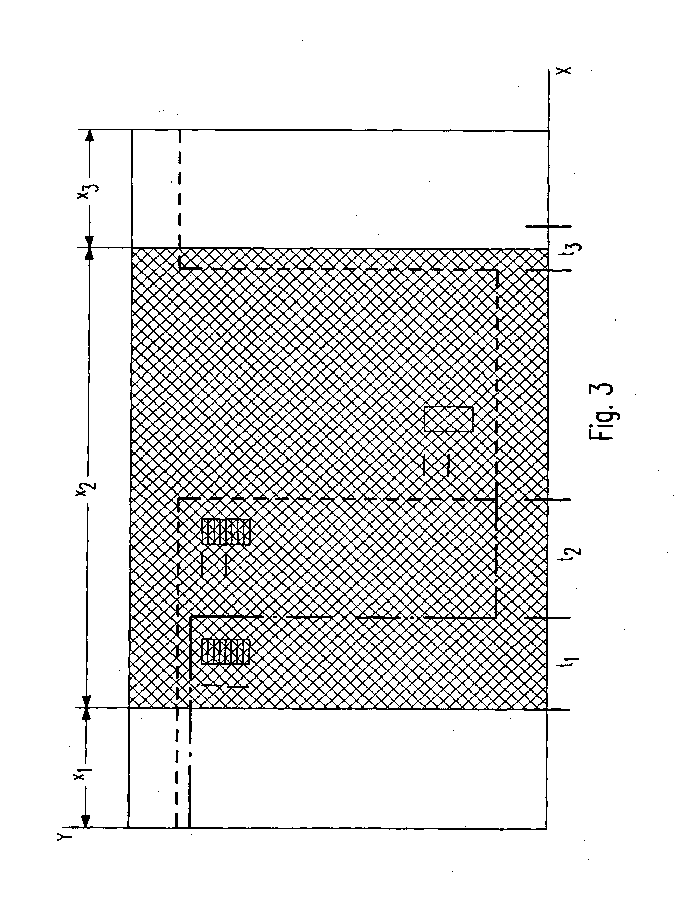

Weiterhin ist beim hier dargestellten Ausführungsbeispiel vorgesehen, dass auch innerhalb des bzw. der Verschattungszeiträume eine Ansteuerung der Abblendvornchtung mit einer gewissen zeitlichen Verzögerung erfolgt ("Verschattungshysterese"). In Fig. 3 ist dies an einem Beispiel dargestellt. Man erkennt ein Diagramm, in dem auf der Abszisse die Zeit und auf der Ordinate schematisch die Position der Abblendvorrichtung aufgetragen ist. Die Zeiträume *x₁* und *x₃* geben potenzielle Besonnungszeiten an. Der Zeitraum *x₂* gibt einen Verschattungszeitraum an.

Die Abblendvorrichtung, im gezeigten Beispiel eine Jalousie, befindet sich im Zeitraum *x₁,* also vor Beginn des Verschattungszeitraums in der zweiten Position bzw. in der Abblendposition, ist also "heruntergelassen". Im Anfangszeitpunkt des Verschattungszeitraums verbleibt die Jalousie zunächst in dieser Abblendposition. Erst nach einer Verzögerungszeit *t₁* + *t₂,* die beispielsweise einige Minuten betragen kann, wird die Abblendvorrichtung in die erste Position verbracht, also "hochgefahren".

Die Verzögerung kann eine als angenehm empfundene Wirkung haben, weil das menschliche Auge in dieser Zeit die Möglichkeit hat, sich an die veränderten Beleuchtungsbedingungen anzupassen.

Um den Übergang der Beleuchtungsbedingungen noch fließender zu gestalten, kann innerhalb des Verzögerungszeitraums *t₁* + *t₂* noch ein Zwischenschritt vorgesehen sein, und zwar indem die Abblendvorrichtung in eine Zwischenposition mit reduzierter Abblendwirkung verbracht wird. Im gezeigten Beispiel wird die Zwischenposition durch Verstellung des Neigungswinkels der Lamellen der Jalousie eingestellt. Der Zeitpunkt für die Einstellung der Zwischenposition kann beispielsweise etwa in der Mitte der Verzögerungszeit liegen. Im gezeigten Beispiel werden hierfür die Lamellen nach der Zeit *t₁,* also etwa nach der Hälfte der Verzögerungszeit *t₁* + *t₂* aus einer etwa senkrechten in eine etwa horizontale Stellung verbracht. In der Zwischenposition kann bereits in nennenswertem Ausmaß diffuses Licht von außerhalb in den Raum gelangen.

Die zuletzt beschriebene zeitverzögerte Öffnung der Abblendvorrichtung, gegebenenfalls mit Zwischenschritt, kann auch in dem entsprechenden Fall vorgesehen sein, in dem während eines potenziellen Besonnungszeitraums - beispielsweise auf Grund von Veränderungen der Bewölkung - die Beleuchtungsbedingungen in dem Raum unter den Blendschwellwert absinken.

## Patentansprüche

1. Steuersystem für eine tageszeitabhängige Steuerung einer Abblendvorrichtung (1) für einen Raum (5) mit wenigstens einem Fenster (2),
wobei durch die Steuerung die Abblendvorrichtung (1) von einer ersten Position, in der die Abblendvorrichtung (1) in einem Zustand ist, in dem sie das Fenster (2) zumindest im Wesentlichen nicht abblendet, in eine zweite Position, in der die Abblendvorrichtung (1) das Fenster (2) zumindest teilweise abblendet, verbracht werden kann,
wobei potenzielle Besonnungszeiträume (*B*) festgelegt sind, in denen die Sonne bezüglich des Fensters (2) so steht, dass auf Grund dieser Konstellation an sich eine Besonnung des Fensters (2) möglich ist,
und die potenziellen Besonnungszeiträume (*B*) bei der Steuerung berücksichtigt werden,
**dadurch gekennzeichnet,**
**dass** außerdem vorab wenigstens ein Verschattungszeitraum (*V*) festgelegt ist, in dem sich ein Objekt zwischen der Sonne und dem Fenster befindet, so dass das Fenster nicht direkt von der Sonne beschienen werden kann,
wobei in dem Verschattungszeitraum (*V*) keine Abblendung gewünscht und/oder erforderlich ist,
wobei der wenigstens eine Verschattungszeitraum (*V*) zumindest teilweise mit den potenziellen Besonnungszeiträumen (*B*) überlappt, und
wobei das Steuersystem dazu ausgelegt ist, bei der Steuerung den Verschattungszeitraum (*V*) ebenfalls zu berücksichtigen.

2. Steuersystem nach Anspruch 1,
bei dem automatisch ein weiterer Verschattungszeitraum (*V*) in Abhängigkeit von dem wenigstens einen Verschattungszeitraum (*V*) festgelegt ist.

3. Steuersystem nach Anspruch 2,
bei dem zur Festlegung des weiteren Verschattungszeitraums (*V*) der Anfangszeitpunkt (*V_{A}*) und/oder der Endzeitpunkt *(V_{E})* des wenigstens einen Verschattungszeitraums (*V*) auf wenigstens einen Tag übertragen wird, der auf den Tag des Anfangszeitpunktes (*V_{A}*) beziehungsweise des Endzeitpunktes *(V_{E})* des wenigstens einen Verschattungszeitraums (V) folgt,
wobei vorzugsweise bei der Übertragung des Anfangszeitpunktes *(V_{A})* und/oder des Endzeitpunktes (*V_{E}*) eine entsprechende Sonnenstandsänderung berücksichtigt wird.

4. Steuersystem nach einem der vorhergehenden Ansprüche,
bei dem bei der Steuerung der Verschattungszeitraum (*V*) mit höherer Priorität berücksichtigt ist, als die potenziellen Besonnungszeiträume (*B*).

5. Steuersystem nach einem der vorhergehenden Ansprüche,
bei dem für den Fall, dass sich zu Beginn des Verschattungszeitraums (*V*) die Abblendvorrichtung (1) nicht in der zweiten Position befindet, innerhalb des Verschattungszeitraums (*V*) die Abblendvorrichtung nicht in die zweite Position verbracht wird.

6. Steuersystem nach einem der vorhergehenden Ansprüche,
bei dem für den Fall, dass sich zu Beginn des Verschattungszeitraums (*V*) die Abblendvorrichtung (1) in der zweiten Position befindet, oder in einer dritten Position zwischen der ersten und der zweiten Position befindet, die Abblendvorrichtung (1) entweder unmittelbar oder mit einer gewissen Zeitverzögerung (*t₁* + *t₂*) in die erste Position verbracht wird.

7. Steuersystem nach einem der vorhergehenden Ansprüche,
bei dem für den Fall, dass unmittelbar nach dem Verschattungszeitraum (*V*) ein potenzieller Besonnungszeitraum (*B*) folgt, die Abblendvornchtung (1) bereits vor Ende des Verschattungszeitraums (*V*) in die erste Position verbracht wird.

8. Steuersystem nach einem der vorhergehenden Ansprüche,
bei dem bei der Steuerung zu einem Zeitpunkt (τ*₂*) vor Beginn des Verschattungszeitraums (*V_{A}*) die Zeitspanne *(V_{A} -* τ*₂*) von dem Zeitpunkt (τ*₂*) bis zum Beginn des Verschattungszeitraums (*V_{A}*) berücksichtigt wird,
wobei vorzugsweise die Abblendvorrichtung zwischen dem Zeitpunkt (τ*₂*) und dem Beginn des Verschattungszeitraums (*V_{A}*) nicht in die zweite Position verbracht wird, falls die Zeitspanne (*V_{A} -* τ*₂*) kleiner ist als eine vorab festgelegte Referenzzeitspanne (Δτ).

9. Steuersystem nach einem der vorhergehenden Ansprüche,
bei dem der vorab wenigstens eine Verschattungszeitraum (*V*) durch manuelle Eingabe festgelegt ist.

10. Steuersystem für eine tageszeitabhängige Steuerung einer Abblendvorrichtung (1) für einen Raum (5) mit wenigstens einem Fenster (2),
wobei durch die Steuerung die Abblendvorrichtung (1) von einer ersten Position, in der die Abblendvorrichtung (1) in einem Zustand ist, in dem sie das Fenster (2) zumindest im Wesentlichen nicht abblendet, in eine zweite Position, in der die Abblendvorrichtung (1) das Fenster (2) zumindest teilweise abblendet, verbracht werden kann,
wobei potenzielle Besonnungszeiträume (*B*) festgelegt sind, in denen die Sonne bezüglich des Fensters (2) so steht, dass auf Grund dieser Konstellation an sich eine Besonnung des Fensters (2) möglich ist,
und die potenziellen Besonnungszeiträume (*B*) bei der Steuerung berücksichtigt werden,
**dadurch gekennzeichnet,**
**dass** bei der Steuerung zu einem Zeitpunkt (τ*₂*) innerhalb eines potenziellen Besonnungszeitraums (*B*) die Zeitspanne (*B_{E} -* τ*₂*) von dem Zeitpunkt (τ*₂*) bis zum Ende des potenziellen Besonnungszeitraums (*B_{E}*) berücksichtigt wird, indem die Abblendvorrichtung (1) zwischen dem Zeitpunkt (τ*₂*) und dem Ende des potenziellen Besonnungszeitraums (*B_{E}*) nicht in die zweite Position verbracht wird, falls die Zeitspanne (*B_{E} -* τ₂) kleiner ist als eine vorab festgelegte Referenzzeitspanne (Δτ).

11. Verfahren zur tageszeitabhängigen Steuerung wenigstens einer Abblendvorrichtung (1) für wenigstens einen Raum (5) mit wenigstens einem Fenster (2),
wobei durch die Steuerung die Abblendvorrichtung (1) von einer ersten Position, in der die Abblendvorrichtung (1) in einem Zustand ist, in dem sie das Fenster (2) zumindest im Wesentlichen nicht abblendet, in eine zweite Position, in der die Abblendvorrichtung (1) das Fenster (2) zumindest teilweise abblendet, verbracht werden kann,
wobei potenzielle Besonnungszeiträume (*B*) festgelegt werden, in denen die Sonne bezüglich des Fensters (2) so steht, dass auf Grund dieser Konstellation an sich eine Besonnung des Fensters (2) möglich ist,
und die potenziellen Besonnungszeiträume (*B*) bei der Steuerung berücksichtigt werden,
**dadurch gekennzeichnet,**
**dass** außerdem vorab wenigstens ein Verschattungszeitraum (*V*) festgelegt wird, in dem sich ein Objekt zwischen der Sonne und dem Fenster befindet, so dass das Fenster nicht direkt von der Sonne beschienen werden kann,
wobei in dem Verschattungszeitraum (*V*) keine Abblendung gewünscht und/oder erforderlich ist,
wobei der wenigstens eine Verschattungszeitraum (*V*) zumindest teilweise mit den potenziellen Besonnungszeiträumen (*B*) überlappt, und
wobei bei der Steuerung der Verschattungszeitraum (*V*) ebenfalls berücksichtigt wird.

12. Verfahren nach Anspruch 11,
bei dem automatisch ein weiterer Verschattungszeitraum (*V'*) in Abhängigkeit von dem wenigstens einen Verschattungszeitraum (*V*) festgelegt wird.

13. Verfahren nach Anspruch 12,
bei dem zur Festlegung des weiteren Verschattungszeitraums (*V*') der Anfangszeitpunkt (*V_{A}*) und/oder der Endzeitpunkt (*V_{E}*) des wenigstens einen Verschattungszeitraums (V) auf wenigstens einen Tag übertragen wird, der auf den Tag des Anfangszeitpunktes (*V_{A}*) beziehungsweise des Endzeitpunktes (*V_{E}*) des wenigstens einen Verschattungszeitraums (V) folgt,
wobei vorzugsweise bei der Übertragung des Anfangszeitpunktes (*V_{A}*) und/oder des Endzeitpunktes *(V_{E})* eine entsprechende Sonnenstandsänderung berücksichtigt wird.

14. Verfahren nach einem der Ansprüche 11 bis 13,
bei dem bei der Steuerung der Verschattungszeitraum (*V*) mit höherer Priorität berücksichtigt wird, als die potenziellen Besonnungszeiträume (*B*).

15. Verfahren nach einem der Ansprüche 11 bis 14,
bei dem für den Fall, dass sich zu Beginn des Verschattungszeitraums (*V*) die Abblendvorrichtung (1) nicht in der zweiten Position befindet, innerhalb des Verschattungszeitraums (*V*) die Abblendvorrichtung (1) nicht in die zweite Position verbracht wird.

16. Verfahren nach einem der Ansprüche 11 bis 15,
bei dem für den Fall, dass sich zu Beginn des Verschattungszeitraums (*V*) die Abblendvorrichtung (1) in der zweiten Position befindet, oder in einer dritten Position zwischen der ersten und der zweiten Position befindet, die Abblendvorrichtung (1) entweder unmittelbar oder mit einer gewissen Zeitverzögerung (*t₁* + *t₂*) in die erste Position verbracht wird.

17. Verfahren nach einem der Ansprüche 11 bis 16,
bei dem für den Fall, dass unmittelbar nach dem Verschattungszeitraum (*V*) ein potenzieller Besonnungszeitraum (*B*) folgt, die Abblendvorrichtung bereits vor Ende des Verschattungszeitraums (*V*) in die erste Position verbracht wird.

18. Verfahren nach einem der Ansprüche 11 bis 17,
bei dem bei der Steuerung zu einem Zeitpunkt (τ*₂*) vor Beginn des Verschattungszeitraums *(V_{A})* die Zeitspanne (*V_{A} -* τ*₂*) ,von dem Zeitpunkt (τ*₂*) bis zum Beginn des Verschattungszeitraums (*V_{A}*) berücksichtigt wird,
wobei vorzugsweise die Abblendvorrichtung (1) zwischen dem Zeitpunkt (τ*₂*) und dem Beginn des Verschattungszeitraums (*V_{A}*) nicht in die zweite Position verbracht wird, falls die Zeitspanne (*V_{A} -* τ*₂*) kleiner ist als eine vorab festgelegte Referenzzeitspanne (Δτ).

19. Verfahren nach einem der Ansprüche 11 bis 18,
bei dem der vorab wenigstens eine Verschattungszeitraum durch manuelle Eingabe festgelegt wird.

20. Verfahren zur tageszeitabhängigen Steuerung wenigstens einer Abblendvorrichtung (1) für wenigstens einen Raum (5) mit wenigstens einem Fenster (2),
wobei durch die Steuerung die Abblendvorrichtung (1) von einer ersten Position, in der die Abblendvorrichtung (1) in einem Zustand ist, in dem sie das Fenster (2) zumindest im Wesentlichen nicht abblendet, in eine zweite Position, in der die Abblendvorrichtung (1) das Fenster (2) zumindest teilweise abblendet, verbracht werden kann,
wobei potenzielle Besonnungszeiträume (*B*) festgelegt werden, in denen die Sonne bezüglich des Fensters (2) so steht, dass auf Grund dieser Konstellation an sich eine Besonnung des Fensters (2) möglich ist,
und die potenziellen Besonnungszeiträume (*B*) bei der Steuerung berücksichtigt werden,
**dadurch gekennzeichnet,**
**dass** bei der Steuerung zu einem Zeitpunkt (τ*₂*) innerhalb eines potenziellen Besonnungszeitraums (*B*) die Zeitspanne (*B_{E} -* τ*₂*) von dem Zeitpunkt (τ*₂*) bis zum Ende des potenziellen Besonnungszeitraums (*B_{E}*) berücksichtigt wird, indem die Abblendvorrichtung (1) zwischen dem Zeitpunkt (τ*₂*) und dem Ende des potenziellen Besonnungszeitraums (*B_{E}*) nicht in die zweite Position verbracht wird, falls die Zeitspanne (*B_{E} -* τ*₂*) kleiner ist als eine vorab festgelegte Referenzzeitspanne (Δτ).

## Claims

1. A control system for controlling a shading device (1) according to the time of day for a room (5) with at least one window (2),
wherein through the controlling the shading device (1) can be brought from a first position, in which the shading device (1) is in a state, in which it does not at least substantially shade the window (2), to a second position, in which the shading device (1) at least partially shades the window (2),
wherein potential sunshine periods (*B*) are determined, in which the sun is positioned in such a way relative to the window (2), that the sun can actually shine on the window as a result of said constellation,
and the potential sunshine periods (*B*) are taken into consideration for controlling purposes,
**characterized in**
**that** in addition at least one shady period (*V*) is defined in advance, in which an object is located between the sun and the window, so that the window cannot be shined on directly by the sun,
wherein in the shady period (*V*) no shading is desired and/or required,
wherein the at least one shady period (*V*) overlaps at least to some extent with the potential sunshine periods (*B*), and
wherein the control system is designed to also take into consideration the shady period (*V*) for controlling purposes.

2. A control system according to claim 1,
in which a further shady period (*V'*) is automatically defined depending on the at least one shady period (*V*).

3. A control system according to claim 2,
in which to define the further shady period (*V*') the starting time (*V_{A}*) and/or the end time (*V_{E}*) of the at least one shady period (*V*) is transferred to at least a day, which follows the day of the starting time (*V_{A}*) or the end time (*V_{E}*) of the at least one shady time (*V*),
wherein preferably during the transfer of the starting time (*V_{A}*) and/or the end time (*V_{E}*) a relevant change in the position of the sun is taken into consideration.

4. A control system according to one of the preceding claims,
in which for controlling purposes the shady period (*V*) is taken into consideration with higher priority than the potential sunshine periods (*B*).

5. A control system according to one of the preceding claims,
in which in the event that at the beginning of the shady period (*V*) the shading device (1) is not located in the second position, within the shady period (*V*) the shading device is not brought into the second position.

6. A control system according to one of the preceding claims,
in which in the event, that at the beginning of the shady period (*V*) the shading device (1) is located in the second position, or is located in a third position between the first and the second position, the shading device (1) is brought either immediately or with a certain time delay (*t₁* + *t₂*) into the first position.

7. A control system according to one of the preceding claims,
in which in the event that immediately after the shady period (*V*) a potential sunshine period (*B*) follows, the shading device (1) is already brought into the first positon before the end of the shady time (*V*).

8. A control system according to one of the preceding claims,
in which for controlling purposes at a time (t₂) before the beginning of the shady period (V_{A}) the time span (V_{A} - t₂) from the time (t₂) up to the beginning of the shady period (V_{A}) is taken into consideration, wherein preferably the shading device (1) is not brought into the second position between the time (t₂) and the beginning of the shady period (V_{A}), if the time span (V_{A} - t₂) is smaller than a reference time span (Δt) determined in advance.

9. A control system according to one of the preceding claims,
in which at least one shady time (*V*) is determined in advance by manual entry.

10. A control system for controlling a shading device (1) for a room (5) with at least one window (2) according to the time of the day,
wherein through the controlling the shading device (1) can be brought from a first position, in which the shading device (1) is in a state, in which it does not at least substantially shade the window (2), to a second position, in which the shading device (1) at least partially shades the window (2),
wherein potential sunshine periods (*B*) are determined, in which the sun is positioned in such a way relative to the window (2), that the sun can actually shine on the window (2) as a result of said constellation,
and the potential sunshine periods (*B*) are taken into consideration for controlling purposes,
**characterized in**
**that** for controlling purposes at a time (t₂) within a potential sunshine period (*B*) the time span (B_{E} - t₂) from the time (t₂) up to the end of the potential sunshine period (B_{E}) is taken into consideration, in that the shading device (1) is not brought into the second position between the time (t₂) and the end of the potential sunshine period (B_{E}), if the time span (B_{E} - t₂) is smaller than a reference time span (Δt) determined in advance.

11. A method for controlling at least a shading device (1) for at least one room (5) with at least one window (2) according to the time of the day, wherein through the controlling the shading device (1) can be brought from a first position, in which the shading device (1) is in a state, in which it does not at least substantially shade the window (2), to a second position, in which the shading device (1) at least partially shades the window (2),
wherein potential sunshine periods (*B*) are determined, in which the sun is positioned in such a way relative to the window (2), that the sun can actually shine on the window as a result of said constellation,
and the potential sunshine periods (*B*) are taken into consideration for controlling purposes,
**characterized in**
**that** in addition at least one shady period (*V*) is defined in advance, in which an object is located between the sun and the window, so that the window cannot be shined on directly by the sun,
wherein in the shady period (*V*) no shading is desired and/or required,
wherein the at least one shady period (*V*) overlaps at least to some extent with the potential sunshine periods (*B*), and
wherein the shady period (*V*) also take into consideration for controlling purposes.

12. A method according to claim 11,
in which a further shady period (*V*') is automatically defined depending on the at least one shady period (*V*).

13. A method according to claim 12
in which to define the further shady period (*V*') the starting time (*V_{A}*) and/or the end time (*V_{E}*) of the at least one shady period (*V*) is transferred to at least a day, which follows the day of the starting time (*V_{A}*) or the end time (*V_{E}*) of the at least one shady time (*V*),
wherein preferably during the transfer of the starting time (*V_{A}*) and/or the end time (*V_{E}*) a relevant change in the position of the sun is taken into consideration.

14. A method according to one of claims 11 to 13,
in which for controlling purposes the shady period (*V*) is taken into consideration with higher priority than the potential sunshine periods (*B*).

15. A method according to one of claims 11 to 14,
in which in the event that at the beginning of the shady period (*V*) the shading device (1) is not located in the second position, within the shady period (*V*) the shading device (1) is not brought into the second position.

16. A method according to one of claims 11 to 15,
in which in the event, that at the beginning of the shady period (*V*) the shading device (1) is located in the second position, or is located in a third position between the first and the second position, the shading device (1) is brought either immediately or with a certain time delay (t₁ + t₂) into the first position.

17. A method according to one of claims 11 to 16,
in which in the event that immediately after the shady period (*V*) a potential sunshine period (*B*) follows, the shading device (1) is already brought into the first positon before the end of the shady time (*V*).

18. A method according to one of claims 11 to 17,
in which for controlling purposes at a time (t₂) before the beginning of the shady period (*V_{A}*) the time span (V_{A} - t₂) from the time (t₂) up to the beginning of the shady period (*V_{A}*) is taken into consideration,
wherein preferably the shading device (1) is not brought into the second position between the time (t₂) and the beginning of the shady period (*V_{A}*), if the time span (V_{A} - t₂) is smaller than a reference time span (Δt) determined in advance.

19. A method according to one of claims 11 to 18,
in which at least one shady time is determined in advance by manual entry.

20. A method for controlling at least one shading device (1) for at least one room (5) with at least one window (2) according to the time of the day,
wherein through the controlling the shading device (1) can be brought from a first position, in which the shading device (1) is in a state, in which it does not at least substantially shade the window (2), to a second position, in which the shading device (1) at least partially shades the window (2),
wherein potential sunshine periods (*B*) are determined, in which the sun is positioned in such a way relative to the window (2), that the sun can actually shine on the window as a result of said constellation,
and the potential sunshine periods (*B*) are taken into consideration for controlling purposes,
**characterized in**
**that** for controlling purposes at a time (t₂) within a potential sunshine period (*B*) the time span (B_{E} - t₂) from the time (t₂) up to the end of the potential sunshine period (*B_{E}*) is taken into consideration, in that the shading device (1) is not brought into the second position between the time (t₂) and the end of the potential sunshine period (*B_{E}*), if the time span (B_{E} - t₂) is smaller than a reference time span (Δt) determined in advance.

## Revendications

1. Système de commande pour une commande, en fonction de l'heure de la journée, d'un dispositif d'obturation (1) pour une pièce (5) avec au moins une fenêtre (2),
le dispositif d'obturation (1) pouvant être amené, grâce au système de commande, d'une première position, dans laquelle le dispositif d'obturation (1) est dans un état dans lequel il n'obture pas la fenêtre (2) au moins globalement, vers une deuxième position, dans laquelle le dispositif d'obturation (1) obture au moins partiellement la fenêtre (2),
des périodes d'ensoleillement potentielles (*B*) étant déterminées, pendant lesquelles le soleil est dans une position par rapport à la fenêtre (2), de façon à ce que, du fait de cette configuration, un ensoleillement de la fenêtre (2) soit possible,
et les périodes d'ensoleillement potentielles (*B*) étant prises en compte lors de la commande,
**caractérisé en ce que**
en outre, au moins une période d'ombrage (*V*) est préalablement déterminée, pendant laquelle un objet se trouve entre le soleil et la fenêtre, de façon à ce que la fenêtre ne puisse pas être éclairée directement par le soleil,
aucune obturation n'étant souhaitée et/ou nécessaire pendant la période d'ombrage (*V*),
l'au moins une période d'ombrage (*V*) coïncidant au moins partiellement avec les périodes d'ensoleillement potentielles (*B*) et
le système de commande étant conçu pour prendre également en compte la période d'ombrage (*V*) lors de la commande.

2. Système de commande selon la revendication 1,
dans lequel une période d'ombrage (*V*') supplémentaire est automatiquement en fonction de l'au moins une période d'ombrage (*V*).

3. Système de commande selon la revendication 2,
dans lequel, pour la détermination de la période d'ombrage (*V*') supplémentaire, le moment initial (*V*_{A}) et/ou le moment final (*V_{E}*) de l'au moins une période d'ombrage (*V*) est transféré sur au moins un jour qui suit le jour du moment initial (*V_{A}*) ou du moment final (*V_{E}*) de l'au moins une période d'ombrage (*V*),
une modification de la position du soleil étant prise en compte de préférence lors du transfert du moment initial (*V_{A}*) et/ou du moment final (*V_{E}*).

4. Système de commande selon l'une des revendications précédentes, dans lequel, lors de la commande, la période d'ombrage (*V*) est prise en compte avec une priorité supérieure aux périodes d'ensoleillement potentielles (*B*).

5. Système de commande selon l'une des revendications précédentes, dans lequel, dans le cas où le dispositif d'obturation (1) ne se trouve pas en deuxième position au début de la période d'ombrage (*V*), le dispositif d'obturation n'est pas amené dans la deuxième position à l'intérieur de la période d'ombrage (*V*).

6. Système de commande selon l'une des revendications précédentes, dans lequel, dans le cas où le dispositif d'obturation (1) se trouve en deuxième position au début de la période d'ombrage (*V*), ou dans une troisième position entre la première et la deuxième position, le dispositif d'obturation (1) est amené soit immédiatement soit avec un certain retard (t₁ + t₂) dans la première position.

7. Système de commande selon l'une des revendications précédentes, dans lequel, dans le cas où une période d'ensoleillement potentielle (*B*) succède immédiatement à la période d'ombrage (*V*), le dispositif d'obturation (1) est amené dans la première position avant la fin de la période d'ombrage (*V*).

8. Système de commande selon l'une des revendications précédentes, dans lequel, lors de la commande, à un moment (τ₂) avant le début de la période d'ombrage (V_{A}), la période (V_{A} - τ₂) avant le moment (τ₂) jusqu'au début de la période d'ombrage (V_{A}) est prise en compte,
le dispositif d'obturation n'étant, de préférence, pas amené, entre le moment (τ₂) et le début de la période d'ombrage (V_{A}), dans la deuxième position, dans le cas où la période (VA - τ₂) est inférieure à une période de référence (Δτ) préalablement déterminée.

9. Système de commande selon l'une des revendications précédentes, dans lequel, l'au moins une période d'ombrage (*V*) est préalablement déterminée par une entrée manuelle.

10. Système de commande pour une commande, en fonction de l'heure de la journée, d'un dispositif d'obturation (1) pour une pièce (5) avec au moins une fenêtre (2),
le dispositif d'obturation (1) pouvant être amené, grâce au système de commande, d'une première position, dans laquelle le dispositif d'obturation (1) est dans un état dans lequel il n'obture pas la fenêtre (2) au moins globalement, vers une deuxième position, dans laquelle le dispositif d'obturation (1) obture au moins partiellement la fenêtre (2),
des périodes d'ensoleillement potentielles (*B*) étant déterminées, pendant lesquelles le soleil est dans une position par rapport à la fenêtre (2), de façon à ce que, du fait de cette configuration, un ensoleillement de la fenêtre (2) soit possible,
et les périodes d'ensoleillement potentielles (*B*) étant prises en compte lors de la commande,
**caractérisé en ce que**
lors de la commande, à un moment (τ₂) à l'intérieur d'une période d'ensoleillement potentielle (*B*), la période (B_{E} - τ₂) entre le moment (τ₂) et la fin de la période d'ensoleillement potentielle (*B_{E}*) est prise en compte,
grâce au fait que le dispositif d'obturation (1) n'est pas amené dans la deuxième position entre le moment (τ₂) et la fin de la période d'ensoleillement potentielle (*B_{E}*), dans le cas où la période (B_{E} - τ₂) est inférieure à une période de référence (Δτ) préalablement déterminée.

11. Procédé de commande, en fonction de l'heure de la journée, d'au moins un dispositif d'obturation (1) pour au moins une fenêtre (5) avec au moins une fenêtre (2),
le dispositif d'obturation (1) pouvant être amené, grâce au système de commande, d'une première position, dans laquelle le dispositif d'obturation (1) est dans un état dans lequel il n'obture pas la fenêtre (2) au moins globalement, vers une deuxième position, dans laquelle le dispositif d'obturation (1) obture au moins partiellement la fenêtre (2),
des périodes d'ensoleillement potentielles (*B*) étant déterminées, pendant lesquelles le soleil est dans une position par rapport à la fenêtre (2), de façon à ce que, du fait de cette configuration, un ensoleillement de la fenêtre (2) soit possible,
et les périodes d'ensoleillement potentielles (*B*) étant prises en compte lors de la commande,
**caractérisé en ce que**
en outre, au moins une période d'ombrage (*V*) est préalablement déterminée, pendant laquelle un objet se trouve entre le soleil et la fenêtre, de façon à ce que la fenêtre ne puisse pas être éclairée directement par le soleil,
aucune obturation n'étant souhaitée et/ou nécessaire pendant la période d'ombrage (*V*),
l'au moins une période d'ombrage (*V*) coïncidant au moins partiellement avec les périodes d'ensoleillement potentielles (*B*) et
lors de la commande, la période d'ombrage (*V*) étant également prise en compte.

12. Procédé selon la revendication 11
dans lequel une période d'ombrage supplémentaire (*V*) est déterminée automatiquement en fonction de l'au moins une période d'ombrage (*V*).

13. Procédé selon la revendication 12
dans lequel, pour la détermination de la période d'ombrage supplémentaire (V'), le moment initial (V_{A}) et/ou le moment final (V_{E}) de l'au moins une période d'ombrage (V) est transférée sur au moins un jour qui succède au jour du moment initial (V_{A}) ou du moment final (V_{E}) de l'au moins une période d'ombrage (V),
une modification de la position du soleil correspondante étant prise en compte de préférence lors du transfert du moment initial (V_{A}) et/ou du moment final (V_{E}).

14. Procédé selon l'une des revendications 11 à 13
dans lequel, lors de la commande, la période d'ombrage (*V*) est prise en compte avec une priorité supérieure aux périodes d'ensoleillement potentielles (*B*).

15. Procédé selon l'une des revendications 11 à 14
dans lequel, dans le cas où, au début de la période d'ombrage (*V*), le dispositif d'obturation (1) ne se trouve pas dans la deuxième position, le dispositif d'obturation (1) n'est pas amené dans la deuxième position à l'intérieur de la période d'ombrage (*V*),

16. Procédé selon l'une des revendications 11 à 15
dans lequel, dans le cas où, au début de la période d'ombrage (*V*), le dispositif d'obturation (1) se trouve dans la deuxième position, ou dans une troisième position entre la première et la deuxième position, le dispositif d'obturation (1) est amené soit immédiatement soit avec un retard déterminé (t₁ + t₂) dans la première position.

17. Procédé selon l'une des revendications 11 à 16
dans lequel, dans le cas où une période d'ensoleillement potentielle (*B*) succède immédiatement à la période d'ombrage (*V*), le dispositif d'obturation est amené dans la première position avant la fin de la période d'ombrage (*V*).

18. Procédé selon l'une des revendications 11 à 17
dans lequel, lors de la commande, à un moment (τ₂) avant le début de la période d'ombrage (V_{A}), la période (V_{A} - τ₂) entre le moment (τ₂) et le début de la période d'ombrage (V_{A}) est prise en compte,
le dispositif d'obturation (1) n'étant de préférence pas amené dans la deuxième position entre le moment (τ₂) et le début de la période d'ombrage (V_{A}), dans le cas où la période (V_{A} - τ₂) est inférieure à une période de référence (Δτ) préalablement déterminée.

19. Procédé selon l'une des revendications 11 à 18
dans lequel au moins une période d'ombrage est préalablement déterminée par une entrée manuelle.

20. Procédé de commande, en fonction de l'heure de la journée, d'au moins un dispositif d'obturation (1) pour au moins une fenêtre (5) avec au moins une fenêtre (2),
le dispositif d'obturation (1) pouvant être amené, grâce au système de commande, d'une première position, dans laquelle le dispositif d'obturation (1) est dans un état dans lequel il n'obture pas la fenêtre (2) au moins globalement, vers une deuxième position, dans laquelle le dispositif d'obturation (1) obture au moins partiellement la fenêtre (2),
des périodes d'ensoleillement potentielles (*B*) étant déterminées, pendant lesquelles le soleil est dans une position par rapport à la fenêtre (2), de façon à ce que, du fait de cette configuration, un ensoleillement de la fenêtre (2) soit possible,
et les périodes d'ensoleillement potentielles (B) étant prises en compte lors de la commande,
**caractérisé en ce que**
lors de la commande, à un moment (τ₂) à l'intérieur d'une période d'ensoleillement potentielle (*B*), la période (B_{E} - τ₂) entre le moment (τ₂) et la fin de la période d'ensoleillement potentielle (B_{E}) est prise en compte,
grâce au fait que le dispositif d'obturation (1) n'étant de préférence pas amené dans la deuxième position entre le moment (τ₂) et la fin de la période d'ensoleillement potentielle (B_{E}), dans le cas où la période (B_{E} - τ₂) est inférieure à une période de référence (Δτ) préalablement déterminée.
